# EUROPÄISCHE PATENTANMELDUNG

(11) **EP 1 536 420 A2**
(43) Veröffentlichungstag der Anmeldung: **01.06.2005**
(21) Anmeldenummer: 04024762.9
(22) Anmeldetag: 18.10.2004
(51) Int. Cl.: G11B 20/00

(54) **Kopiergeschützter Datenträger und Verfahren zum Bewirken eines Kopierschutzes von Datenmengen**

(30) Priorität: 25.11.2003 DE 10355404
(71) Anmelder: OK Media Disc Service GmbH & Co. KG, 24589 Nortorf (DE)
(72) Erfinder: Sellmer, Dirk, 24146 Kiel (DE); Klahn, Stefan, 24568 Kaltenkirchen (DE)
(74) Vertreter: Biehl, Christian, Dipl.-Phys.

(57) **Zusammenfassung**

Verfahren zum Bewirken eines Kopierschutzes gegen unberechtigte Kopier-Vervielfältigung ('Rippen' und 'Brennen') von auf mit einem Menü versehenden DVD-Video-Datenträgern aufgezeichneten Datenmengen, wobei der DVD-Video-Datenträger mit einem 'FP-Bereich' (für engl. first play) versehen ist, und eine Störstruktur in einem von einem Wiedergabegerät nicht benötigten, aber von einem Daten nur lesenden, nicht also interpretierenden Lesegerät gelesenen Bereich, die eine Unterbrechung des Lesevorgangs bewirkt, vorgesehen ist, und Sprungbefehlsdaten, die von einem die Daten interpretierenden Wiedergabegerät als Befehl zum Überspringen eines nachfolgenden Bereichs interpretiert werden, indem in dem 'FP-Bereich' des Datenträgers statt der zur Speicherposition des Menüs auf dem Datenträger führenden Daten Daten vorgegeben werden, die das Auslesen eines anderen Speicherbereichs bewirken, hinzugefügt werden, wobei in dem angegebenen anderen Speicherbereich das Wiedergabegerät programmierende Steuerbefehle abgelegt sind, die datenträgerspezifische Bitfolgen als Sprungbefehle definieren, und wobei am Ende des angegebenen anderen Speicherbereichs Daten für ein Bewirken des weiteren Auslesens an dem Speicherort des Menüs vorgesehen wird, und die Störstruktur in einem durch die Steuerbefehle umprogrammierten Wiedergabegerät, durch die datenträgerspezifischen Bitfolgen veranlaßt, übersprungen werden.

## Beschreibung

Die Erfindung betrifft einen kopiergeschützten Datenträger und ein Verfahren zum Bewirken eines Kopierschutzes von Datenmengen mit den Merkmalen der unabhängigen Ansprüche.

Das Problem der widerrechtlichen Kopien urheberrechtlich geschützter Inhalte nimmt insbesondere bei den zur Zeit vertriebenen DVD-Video-Datenträgem immer besorgniserregendere Maße an. Mit Kopierprogrammen wird der digitale Inhalt von DVDs ausgelesen und in einer Vielzahl illegaler Kopien schnell verbreitet.

Während für von einem Computer gelesene Datenträger eine Logikeinheit zur Verfügung steht, in die ein Programm zur Auswertung des Datenträgers eingebracht werden kann, so dass beispielsweise ein Kopierschutz wie er in der EP 0 987 705 B1 (ebenfalls OK Media Disc Service GmbH & Co. KG) beschrieben ist, zur Anwendung kommen kann, ist für DVD-Abspielgeräte dieses Verfahren nicht einsetzbar, da keine Logikeinheit zur Verfügung steht, in die ein Programm eingeladen werden könnte.

Weiter muß vorausgeschickt werden, daß die großen Datenmengen, wie sie u.a. auf DVDs vorhanden sind, als 'stream' von Vektorinformationen und nicht etwa Bildpixeln vorhanden sind, und sie erst von einem darauf spezialisierten Prozessor eines DVD-Abspielgerätes in jeweils anzuzeigende Bilder, Zwischenbilder und Ton zusammengesetzt werden.

Es ist nun Aufgabe der Erfindung, ein Verfahren zu schaffen, einen Kopierschutz in die Daten einer Video-DVD einzubringen, der die normale Wiedergabe auf den DVD-Abspielgeräten mit dem originalen Datenträger ermöglicht, für mit Kopierprogrammen erstellte Kopien wenigstens die Wiedergabe aber verhindert, vorteilhafterweise bereits das Auslesen größerer Datenmengen, insbesondere sogenannter "Videostreams" mit den verbreiteten PCs von Privatanwendern verhindert oder doch zumindest vorzeitig abbrechen lässt.

Erfindungsgemäß wird dies durch ein Verfahren mit den Merkmalen des Anspruches 1 und einen mit dem Verfahren hergestellten Datenträger gelöst, bei dem zusätzliche Sprungbefehlsdaten für ein die Daten interpretierendes Wiedergabegerät, kurz "DVD-Wiedergabegerät", und nachfolgende bei der Wiedergabe zu überspringende Datenbereiche beliebiger Länge zu den auf dem Datenträger üblicherweise aufzubringenden Daten an wenigstens einem Ort innerhalb des später wiederzugebenden Datenmaterials hinzugefügt werden.

Sprungbefehle, die beispielsweise dazu benutzt werden, von bestimmten Orten des Menüs an bestimmte Kapitel auf einer DVD zu springen, kann ein DVD-Wiedergabegerät ausführen, diese werden jedoch bei einem Bit-zu-Bit Erstellen einer Kopie selbstverständlich nicht interpretiert, sondern würden versucht werden, schlicht abgespeichert und später identisch kopiert zu werden.

Wenn nun der Original-Datenträger unter Änderung der physikalischen Integrität innerhalb der beliebigen Daten vorbestimmter Länge hinter diesen Sprungbefehlen geändert wird, werden Lesefehler bei Kopieren provoziert, die zum Ergebnis haben, dass z.B. spätestens an dieser Stelle kein Videodatenstrom mehr vorliegt und ein etwaiges Kopierprogramm keine lesefähigen Daten mehr produzieren kann.

Da üblicherweise eine Videosequenz auf DVDs in einem 1 Gigabyte großen "video object file" (VOB) abgespeichert ist, d. h. in vier bis fünf Einheiten auf einer sog. DVD 5 vorliegt (oder auch fünf bis neun Einheiten auf einer sogenannten DVD 9), deren Anfang und Ende leicht aufgefunden werden können, wird vorgeschlagen, in jeder VOB derart beschädigend veränderte Daten einzufügen. Insbesondere am Anfang der ersten VOB und am Ende der letzten VOB, beispielsweise vor dem "Showdown" eines Films.

Nun stellt sich bei DVDs das weitere Problem, dass das Menü erlaubt, kapitelweise (zum Beispiel in zwanzig verschiedenen Kapiteln) die DVD anzusehen. Bei Video-DVDs, auf denen Musikvorführungen ist, werden beispielsweise einzelne Musiktitel so angesprungen. Um nun das Menü selbst unzugänglich zu gestalten, wird vorgeschlagen, einem sogenannten FP (first play) - Bereich, dem Bereich, der bei einer DVD zuerst ausgelesen wird und an dem die Speicherposition der Daten für die Wiedergabe des Menüs, auf dem Datenträger vorhanden sind, derart zu verändern, dass nicht zu den Daten des Menüs, sondern zu einem anderen Speicherbereich gesprungen wird, an dem ein Vorschalt-Menü mit Steuerbefehlen für ein DVD-Wiedergabegerät abgelegt ist.

Hier können in verschlüsselter Weise bestimmte Bit-Folgen, die für jede DVD oder für jeden DVD-Titel anders gewählt sein können, als Sprungbefehle definiert werden. Auf diese Weise lässt sich erreichen, dass Kopierprogramme nicht einfach bestimmte Bitfolgen als Sprungbefehle ausmachen, oder eben Kopierprogrammen "beigebracht" wird, nach definierten Sprungbefehlen zu suchen. Im übrigen würde ein solcher Sprungbefehl, wenn er an eine absolute und keine relative Adresse auf dem Datenträger gerichtet ist, wegen anderer Dimensionierung eines kopierten Datenträgers an einen logisch anderen Ort in der Datenmenge zeigen.

Das originale Menü sollte zudem ebenfalls durch Einfügen von Sprungbefehls-Bitfolgen und nachfolgenden z.B. beschädigt veränderten, beliebigen Daten vor einem einfachen Kopieren geschützt sein. Ansonsten könnte versucht werden, unter Verwerfung des Vormenüs auf der DVD das Originalmenü zu suchen und dieses zum Auslesen des DVD-Inhaltes zu nutzen.

Schließlich wird noch vorgeschlagen, durch geeignet in die Daten des Menüs eingefügte Befehlsfolgen ein Wiedergabegerät dazu zu veranlassen, zu prüfen, ob es mit den Werten der begrenzten Zahl von ihm bisher erfasster und gespeicherter Variablen vereinbar ist, dass bereits das Vor-Menü durchlaufen wurde, so dass das DVD-Wiedergabegerät dazu in der Lage ist, zu bestimmen, ob es eine Original-DVD liest oder eine Kopie, bei der das Vor-Menü auf eine irgendwie geartete Art übersprungen wurde. Diese Befehlsfolgen könnten wieder verschlüsselt vorgesehen sein.

Neben dem Verfahren zum Erzeugen eines gegen Kopieren geschützten Datenträgers, bei dem insbesondere die zunächst auf eine Matrize aufgebrachte Information durch die oben genannten zusätzlichen Informationen verändert wird und dann eine Vielzahl von gleichen Datenträgern mit dem Verfahren erzeugt wird, ist Gegenstand der unabhängigen Ansprüche 6 - 10 auch ein kopiergeschützter Datenträger, auf dem sich die genannten hinzugefügten Befehlssequenzen insbesondere für ein DVD-Wiedergabegerät befinden.

Schließlich erlaubt die Erfindung auch ein Verfahren zur Erzeugung eines das unerlaubte Kopieren und Manipulieren an den Sprungbefehlen anzeigenden Datenträgers für den Fall, dass es spezielle Wiedergabegeräte gibt oder Computer derart konfiguriert werden, dass sie die Sprungbefehle nicht oder nach vorheriger Bestätigung durch einen Benutzer ausführen.

Für diesen Fall können die Sprungbefehlsdaten wie oben beschrieben eingefügt werden und ihnen nachfolgend das Kopieren anzeigende Daten, beispielsweise ein Bild "Dies ist eine unerlaubte Kopie", gegebenenfalls noch gefolgt von Informationen, die über das Erstellen der Kopie vorliegen, angezeigt werden.

Nach Anzeige eines derartigen Bildes könnten durch auf der DVD bereits vorhandene Daten anderer Befehlsarten Maßnahmen getroffen sein, die das Wiedergeben wenigstens wesentlicher Teile der übrigen Daten verhindern. Beispielsweise könnte der Ton auf Null geschaltet werden oder durch andersartige als durch Sprungbefehle ein Abbruch der Wiedergabe erzielt werden.

Für die Änderung der physikalischen Struktur auf den hinzugefügten von DVD-Wiedergabegeräten, die die gelesenen Daten sogleich interpretieren und auf Sprungbefehle durchsuchen, die angefahrenen Datenbereiche wird vorgeschlagen, die physikalische Struktur in den hinzugefügten zu überspringenden Datenstrom dadurch zu ändern, dass entweder der "track pitch", der Abstand der Spuren, so eng gemacht wird, dass es zu Lesefehlern kommt, dass die "scanning velocity" aus den normierten Vorgaben herausführt, dass der Fokus bei der Herstellung des "Masters" geändert wird, die Intensität oder andere Datenfehler eingefügt werden. Hier gibt es eine Vielzahl von Möglichkeiten, die denkbar sind.

Gemein ist den Verfahren aber das Hinzufügen von Sprungbefehlsdaten, die von einem die Daten interpretierenden Wiedergabegerät als Befehl zum Überspringen eines nachfolgenden Bereichs interpretiert werden, und die Einbringung einer Störstruktur in dem von dem Wiedergabegerät zu überspringenden, aber von einem Daten nur lesenden, nicht also interpretierenden Lesegerät gelesenen Bereich, die eine Unterbrechung des Lesevorgangs bewirkt.

## Patentansprüche

1. Verfahren zum Bewirken eines Kopierschutzes gegen unberechtigte Kopier-Vervielfältigung (,Rippen' und ,Brennen') von auf mit einem Menü versehenden DVD-Video-Datenträgem aufgezeichneten Datenmengen,
- wobei der DVD-Video-Datenträger mit einem 'FP-Bereich' (für engl. first play) versehen ist, und
- eine Störstruktur in einem von einem Wiedergabegerät nicht benötigten, aber von einem Daten nur lesenden, nicht also interpretierenden Lesegerät gelesenen Bereich, die eine Unterbrechung des Lesevorgangs bewirkt, vorgesehen ist,
**gekennzeichnet durch** :
- Hinzufügen von Sprungbefehlsdaten, die von einem die Daten interpretierenden Wiedergabegerät als Befehl zum Überspringen eines nachfolgenden Bereichs interpretiert werden, indem in dem ,FP-Bereich' des Datenträgers statt der zur Speicherposition des Menüs auf dem Datenträger führenden Daten Daten vorgegeben werden, die das Auslesen eines anderen Speicherbereichs bewirken,
- wobei in dem angegebenen anderen Speicherbereich das Wiedergabegerät programmierende Steuerbefehle abgelegt sind, die datenträgerspezifische Bitfolgen als Sprungbefehle definieren,
- wobei am Ende des angegebenen anderen Speicherbereichs Daten für ein Bewirken des weiteren Auslesens an dem Speicherort des Menüs vorgesehen wird, und
- die Störstruktur in einem **durch** die Steuerbefehle umprogrammierten Wiedergabegerät, **durch** die datenträgerspezifischen Bitfolgen veranlaßt, übersprungen werden.

2. Verfahren nach Anspruch 1, **dadurch gekennzeichnet, daß** bei einem mit Videodaten zu versehenen Datenträger wenigstens am Anfang wenigstens des ersten VOB (video object files) eines Hauptdatenstreams Sprungbefehlsdaten vor einem Bereich, der eine Unterbrechung des Lesevorgangs bewirkt eingefügt werden, wobei die Sprungbefehlsdaten bei der Errechnung von Wiedergabebildern von einem Wiedergabegerät interpretiert werden und zu einem Sprung der laufenden Wiedergabe hinter das Ende der eingefügten Daten bewirken.

3. Verfahren nach einem der vorangehenden Ansprüche, **dadurch gekennzeichnet, daß** die Sprungbefehle an eine absolute Adresse auf dem Datenträger gerichtet sind.

4. Verfahren nach Anspruch 3, **dadurch gekennzeichnet, daß** Sprungbefehls-Bitfolgen und nachfolgende, beschädigend veränderte beliebige Daten vorbestimmter Länge auch in den Daten vorgesehen sind, in denen das Menü auf dem Datenträger abgelegt ist.

5. Verfahren nach Anspruch 3 oder 4, **dadurch gekennzeichnet, daß** Befehlsfolgen für das Wiedergabegerät in die Daten des Menüs einfügt werden, die veranlassen, aus dem Wert der begrenzten Zahl der erfaßten und gespeicherten Variablen, die das Wiedergabegerät verwaltet, zu bestimmen, ob zuvor der angegebene andere Speicherbereich aufgerufen wurde und die für den Fall, daß dies nicht bestimmt wird, die Wiedergabe des Menüs nicht zulassen.

6. Verfahren nach einem der vorangehenden Ansprüche, **dadurch gekennzeichnet, daß** das die Einbringung von Störstrukturen Verfahren aus der folgenden Gruppe von Maßnahmen umfaßt : Variation des Spurabstandes (track pitch), Defokussierung des Schreibelasers beim Mastern, Änderung der Intensität des Schreibelasers, Änderung der scanning velocity, Anbringung nicht normierter datenähnlicher Strukturen, physikalische Veränderung der Medienoberfläche.

7. Kopiergeschützter Datenträger, hergestellt mit einem Verfahren nach einem der vorangehenden Ansprüche.

8. Kopiergeschützter, wenigstens eine Filmsequenz tragender Datenträger nach Anspruch 7, **dadurch gekennzeichnet, daß** wenigstens am Anfang wenigstens des ersten VOB (engl. video object files) des Hauptfilms Sprungbefehlsdaten vor beschädigend veränderten Daten eingefügt sind, die zu einem Sprung der Wiedergabe an eine Position hinter das Ende der eingefügten Daten veranlassen.

9. Kopiergeschützter mit einem Menü versehener Datenträger nach einem der Ansprüche 7 oder 8, **dadurch gekennzeichnet, daß** in einem 'FP-Bereich' (engl. first play) des Datenträgers statt der zur Speicherposition des Menüs auf dem Datenträger führenden Daten Daten vorgesehen sind, die das Auslesen eines anderen Speicherbereichs bewirken, wobei in dem angegebenen anderen Speicherbereich Steuerbefehle für ein Wiedergabegerät zur Auslesung und Interpretation durch dieses abgelegt sind, die datenträgerspezifische Bitfolgen als Sprungbefehle definieren, und wobei am Ende des angegebenen anderen Speicherbereichs Daten für einen Sprung an den Speicherort des Menüs vorgesehen wird.

10. Kopiergeschützter Datenträger nach Anspruch 9, **dadurch gekennzeichnet, daß** Sprungbefehls-Bitfolgen und nachfolgende, beschädigend veränderte beliebige Daten vorbestimmter Länge auch in den Daten vorgesehen sind, in denen das Menü auf dem Datenträger abgelegt ist.

11. Kopiergeschützter Datenträger nach Anspruch 9 oder 10, **dadurch gekennzeichnet, daß** Befehlsfolgen für das Wiedergabegerät in die Daten des Menüs einfügt werden, die veranlassen, aus dem Wert der begrenzten Zahl der erfaßten und gespeicherten Variablen, die das Wiedergabegerät verwaltet, zu bestimmen, ob zuvor der angegebene andere Speicherbereich aufgerufen wurde und die für den Fall, daß dies nicht bestimmt wird, die Wiedergabe des Menüs nicht zulassen.

12. Verfahren nach einem der vorangehenden Ansprüche zur Erzeugung eines das unerlaubte Kopieren und Manipulieren an den Sprungbefehlen anzeigenden Datenträgers, **dadurch gekennzeichnet, dass** die Störstruktur wenigstens das unerlaubte Kopieren bildhaft anzeigende Daten umfaßt, sowie weitere, andersartige Befehle am Ende der das Kopieren anzeigenden Daten, die wenigstens ein Auslassen der Wiedergabe wesentlicher Teile der Hauptdaten bewirken.
